# EUROPEAN PATENT SPECIFICATION

(11) **EP 3 853 501 B1**
(45) Date of publication and mention of the grant of the patent: **07.06.2023**
(21) Application number: 19786906.8
(22) Date of filing: 18.09.2019
(51) Int. Cl.: F16H 37/02

(54) **POWERTRAIN WITH A CONTINUOUSLY VARIABLE TRANSMISSION FOR AN ELECTRIC VEHICLE AND METHOD FOR OPERATING SUCH POWERTRAIN**
ANTRIEBSSTRANG MIT EINEM STUFENLOSEN GETRIEBE FÜR EIN ELEKTROFAHRZEUG UND VERFAHREN ZUM BETREIBEN EINES SOLCHEN ANTRIEBSSTRANGS
GROUPE MOTOPROPULSEUR AVEC TRANSMISSION À VARIATION CONTINUE POUR UN VÉHICULE ÉLECTRIQUE ET PROCÉDÉ DE FONCTIONNEMENT D'UN TEL GROUPE MOTOPROPULSEUR

(30) Priority: 18.09.2018 WO PCT/EP2018/025237
(43) Date of publication of application: 28.07.2021
(73) Proprietor: Robert Bosch GmbH, 70442 Stuttgart (DE)
(72) Inventor: RÖMERS, Lucas Hubertus Johannes, 6129 BJ Berg aan de Maas (NL); GÄRTNER, Manuel, 71576 Burgstetten (DE)
(74) Representative: Plevier, Gabriël Anton Johan Maria
(86) International application number: PCT/EP2019/025309
(87) International publication number: WO 2020/057779

(56) References cited:
- EP-A2- 0 145 462
- WO-A1-2017/069042
- WO-A2-2018/045128
- Jiageng Ruan ET AL: "Comparison of Power Consumption Efficiency of CVT and Multi-Speed Transmissions for Electric Vehicle", International Journal of Automotive Engineering, 1 January 2018 (2018-01-01), pages 268-275, XP055597283, DOI: 10.20485/jsaeijae.9.4_268 Retrieved from the Internet: URL:https://www.jstage.jst.go.jp/article/j saeijae/9/4/9_20184119/_pdf/-char/en
- Anonymous: "Electric Vehicle Powertrain Systems Engineering for Performance and the Challenges When Comparing to ICE Powertrain Performance - QuantumWorks", , 5 July 2018 (2018-07-05), XP055655345, Retrieved from the Internet: URL:https://quantumworks.com/electric-vehi cle-powertrain-systems-engineering-for-per formance-and-the-challenges-when-comparing -to-ice-powertrain-performance/ [retrieved on 2020-01-07]

## Description

The present invention relates to an electric passenger car including a powertrain with an electric machine (EM), also known as a motor/generator device, a driven wheel or wheels and with a gearing that drivingly connects, i.e. rotationally couples, the EM to the driven wheels. Typically, the said gearing provides a fixed speed (reduction) ratio between the EM and the driven wheels. Such speed ratio provided by the gearing determines, on the one hand, a maximum attainable vehicle speed and, on the other hand, a maximum attainable torque level at the driven wheels at standstill, which torque level determines the launch performance (including the so-called gradeability) of the electric passenger car.

It is noted that within the context of the present disclosure the term electric passenger car refers to a purely electric vehicle in accordance with common general knowledge, i.e. as excluding a so-called hybrid motor vehicle that is, for example, known from the internal patent application publication WO2017/069042. In other words, the presently considered powertrain includes only the electric machine as a prime mover and does, in particular, not include an internal combustion engine that is, or at least can be, connected to the driven wheels in addition to or instead of the electric machine.

Because the EM typically has a much wider range of attainable rotational speeds than the known internal combustion engine (ICE), such a fixed ratio gearing can provide the electric passenger car powertrain with a reasonable dynamic performance. Nevertheless, the maximum vehicle speed is limited by a maximum rotational speed of the EM. To overcome such limitation it has been proposed in the art to include a 2-speed transmission in the gearing, such that a low or a high gear can be selected between the EM and the driven wheels. By such 2-speed transmission the maximum attainable vehicle speed increases (in high gear) without compromising the vehicle launch performance (in low gear). Additionally, the 2-speed transmission allows for an improvement of the operating efficiency of the electric passenger car powertrain, since the EM can thereby be operated at one of two speed values in relation to the vehicle speed, in particular at the one value that provides the powertrain with the higher efficiency.

The application of multiple (i.e. 3- or more) speed transmissions, including continuously variable transmissions (CVTs), in the electric passenger car powertrain is known from the 2018 SAE-Japan publication titled "Comparison of Power Consumption Efficiency of CVT and Multi-Speed Transmissions for Electric Vehicle", that provides a theoretic efficiency analysis of such powertrains. Moreover, the internal patent application publication WO2018/045128-A2 discloses several alternative electric powertrain configurations, specifically with a ball variator planetary-type CVT. However, such multiple speed transmissions are currently not applied in the known electric passenger car powertrain, at least not commercially, because already with the 2-speed transmission ample torque can be generated at the drive wheels at standstill while still enabling a customary maximum vehicle speed, even in comparison with a conventional ICE powertrain.

According to the present invention and in contrast with the aforementioned, state of the art design considerations, the CVT, or at least the key parts thereof known as a variator unit (i.e. those parts that are minimally required to vary the speed ratio between an input shaft and an output shaft thereof), can nevertheless provide the electric passenger car with an unexpected technical advantage. In particular according to the present invention, by including the variator unit in the gearing of the electric passenger car according to claim 1 hereof, the EM can be downsized considerably. Hereto, the present invention relies on a lesser known characteristic of the EM, namely that its maximum, i.e. peak torque level to a large extend determines its physical size, weight and unit cost, whereas a peak power level of that EM is typically only a secondary factor. In the electric passenger car in accordance with claim 1, the EM can be downsized in terms of, at least, its peak torque level, favourably without substantially compromising the EM peak power, i.e. favourably substantially without compromising the power specification and launch performance of the electric passenger car. Moreover, also a continuous power of the EM, as well as the maximum vehicle speed that is largely determined by such EM continuous power, can remain largely unaffected by such downsizing, at least within a reasonable downsizing ratio.

For example, according to the present invention, the peak torque required from EM during operation of the electric passenger car can be favourably reduced to between one and two thirds, typically, by including the variator unit in the electric passenger car powertrain. Additionally, a maximum rotational speed required from the EM during operation can typically be favourably reduced thereby by 15% to 35%. In particular according to the present invention, the thus downsized EM is preferably characterised by an at least essentially constant EM peak torque as a function of its rotational speed, at least in predominant part of its speed range, i.e. for more than 50%. Preferably, however, the EM peak torque is constant for at least 80%, more preferably for at least 90% or even 95% of the EM speed range. As a result the EM peak power of the electric passenger car is hardly compromised. Preferably, the EM is designed to generate its peak torque in its entire speed range, i.e. up to its maximum operating speed.

The gearing further includes two speed reduction stages, each providing a fixed speed reduction ratio between an upstream or input gear wheel and a downstream or output gear wheel thereof, whereof a first stage is incorporated between the EM and the variator unit and whereof a second stage is incorporated between the variator unit and the driven wheels, which second stage normally includes at least a differential gearing for distributing a driving power between two or more driven wheels of the electric passenger car. The maximum overall speed reduction provided by the gearing, i.e. by the said two speed reduction stages and the variator unit, preferably amounts to at least 20, more preferably to 30 or more. This maximum overall speed reduction is much higher than what is typically applied in the state of the art electric passenger car powertrain without the variator unit, which feature is enabled by the variator unit and allows for the above-discussed EM downsizing.

Preferably, a ratio coverage of the variator unit, as defined by the quotient between a largest and a smallest speed ratio between an input shaft and an output shaft thereof, amounts to between 3.5 and 4.5, preferably about 4, such that by shifting the variator unit the overall speed reduction of the gearing can be continuously reduced to about one quarter of the said maximum value thereof. In comparison with the ratio coverage of the state of the art CVT for the conventional ICE powertrain, a ratio coverage of about 4 is surprisingly small, but at the same time it is found to be entirely adequate for the presently considered electric passenger car powertrain.

It is a well-known feature of most variator unit designs, including in particular a drive belt-and-pulleys-type variator unit, that these provide the said speed ratio range symmetrically around unity, i.e. around 1 to 1 speed ratio. For example, in case of the above-mentioned variator ratio coverage of 4, a largest speed ratio of the variator unit amounts to 2:1 and a smallest one amounts to 1:2. However, according to the present invention, in the electric passenger car powertrain, the variator unit preferably provides an asymmetric speed ratio range instead, with the said largest variator speed ratio thereof being considerably larger than the inverse value of the said smallest variator speed ratio thereof. In particular according to the present invention, the largest variator speed ratio amounts to at least 125%, preferably at least 140% of the inverse value of its smallest speed ratio. In a specific embodiment of the variator unit according to the present invention, its largest speed ratio amounts to 2.4:1 and its smallest speed ratio amounts to 1:1.67, such that the ratio coverage of that variator unit amounts to (2.4:1)/(1:1.67)=4.0.

By the above-described feature of the asymmetric variator speed ratio range, the operating efficiency of the electric passenger car powertrain could be improved for a given variator ratio coverage. In particular, by reducing a rotational speed of the output shaft of the variator unit during operation by increasing the said smallest speed ratio thereof (for a given variator ratio coverage), the internal power loss of the variator unit -that is a/o proportional to such output speed- is favourably reduced as well. In this respect, it is noted that this latter design feature and efficiency optimisation of the variator unit are unique to the presently considered electric passenger car powertrain. To the contrary, the operating efficiency of the conventional ICE powertrain is known to benefit most from a largest possible and, hence, symmetric variator speed ratio range.

A further optimisation possibility for the operating efficiency of the electric powertrain according to the present invention lies in the selection of the speed reduction ratios provided by the said two speed reduction stages individually. According to the present invention, the speed reduction ratio of the first ("upstream") stage is preferably set as large as possible, in particular as determined by the mathematical quotient of a (maximum) torque transmitting capability of the variator unit and the EM peak torque. Such preferred, large speed reduction ratio of the first speed reduction stage -that can even exceed that of second speed reduction stage- further supports the presently considered EM downsizing. In this respect, it is observed that the state of the art electric passenger car powertrain typically also includes two speed reduction stages, however, with the speed reduction ratio provided by the second ("downstream") stage being considerably larger than that of the first ("upstream") stage. Such state of the art design is linked to the circumstance that the second speed reduction stage includes or is realised by a pinion wheel and a crown wheel of the differential gearing that provide a relatively large speed reduction ratio by design.

A first favourable side effect of the asymmetric variator speed ratio range, in particular in case of the said belt-and-pulleys-type variator unit, is that its output shaft can be provided with a larger diameter than its input shaft, which is ideally suited to cope with the large torque amplification of the largest variator speed ratio in the said asymmetric range. In case of the said belt-and-pulleys-type variator unit a second favourable side effect of the asymmetric variator speed ratio range occurs. Namely of this type of variator unit, its input pulley can be provided with a smaller outer diameter than its output pulley, which is ideally suited for a physical arrangement of the powertrain that requires only a limited building space, especially in the height direction of the electric passenger car. In particular, the variator unit is oriented upwards in the downstream direction, i.e. in the direction from its input shaft to its output shaft. As a result, the powertrain as a whole can be located favourably low in the electric passenger car, i.e. close(st) to a road surface.

The invention will be explained in more detail by means of non-limiting, illustrative embodiments thereof and with reference to the drawing, in which:
figure 1 is a schematic representation of the functional arrangement of the main components of a known electric passenger car powertrain;
figure 2 is a schematic representation of the functional arrangement of the main components of a novel electric passenger car powertrain in accordance with the present invention; and
figure 3 is a graph illustrating the peak torque vs rotational speed characteristic of two differently specified electric machines.

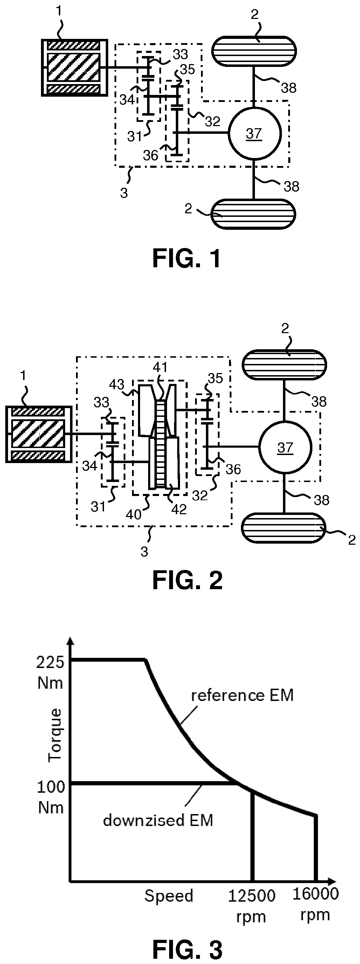

Figure 1 shows a basic example of a known powertrain for an electric passenger car. The known electric passenger car powertrain comprises an electric machine 1 (EM), also known as a motor/generator device, two driven wheels 2 of the electric passenger car and a gearing 3 that drivingly connects the EM 1 to the driven wheels 2. In the embodiment of figure 1 the known gearing 3 provides a fixed speed ratio between the EM 1 and the driven wheels 2 by means of a gear train consisting of two speed reduction stages 31, 32 of two meshing gear wheels 33, 34; 35, 36 each that are arranged in series. An upstream gear wheel 33 of a first, i.e. upstream speed reduction stage 31 is directly driven by, i.e. rotates as one with the EM 1, preferably by being placed on a rotor shaft thereof. A downstream gear wheel 34 of the first speed reduction stage 31 rotates as one with an upstream gear wheel 35 of a second, i.e. downstream speed reduction stage 32, typically by being placed on a common shaft. A downstream gear wheel 36 of the second speed reduction stage 32 drives the driven wheels 2 through a differential gearing 37 for distributing a driving power between two or more driven wheels 2 of the electric passenger car through a drive shaft 38. Actually, the second speed reduction stage 32 can be embodied by a pinion wheel and a crown wheel of the differential gearing 37, i.e. as an integral part of the differential gearing 37.

The overall speed reduction ratio provided by the gearing 3 determines, on the one hand, a maximum attainable speed of the electric passenger car and, on the other hand, a maximum attainable torque level at the driven wheels 2 of the electric passenger car at standstill. In this respect it may be observed that, at least in theory, only a single speed reduction stage could be applied in the known electric passenger car powertrain. However, because of the relatively high maximum rotational speed of the EM 1, the speed reduction ratio that is required between the EM 1 and the driven wheels 2 would require an impractically sized gearwheels. In particular, a speed reduction ratio of more than 10:1, typically of around 12:1 is required from the gearing 3 overall.

As an improvement of the known electric passenger car powertrain of figure 1 and in accordance with the present invention, a variator unit 40, providing a continuously variable speed ratio between an input shaft and an output shaft thereof, is included therein, for example in the manner illustrated in figure 2. The variator unit 40 is as such well-known, in particular in the form comprising a drive belt 41 that is wrapped around and in frictional contact with both an input pulley 42 on the input shaft and an output pulley 43 on the output shaft of the variator unit 40. An effective radius of the friction contact between the drive belt 41 and a pulley 42, 43 can be varied in mutually opposite directions between the two pulleys 42, 43 by means of a control and actuation system of the variator unit 40 (not shown), such that a speed ratio provided by the variator unit between its input pulley 42 and its output pulley 43 can be continuously varied with a certain range. For example, in a largest speed ratio within such variator speed ratio range, a rotational speed of its output pulley 43 is maximally reduced relative to a rotational speed of its input pulley 42 by the drive belt 41 contacting the input pulley 42 at a small effective radius and the output pulley 43 at a large effective radius.

Evidently this latter, novel arrangement of the electric passenger car powertrain and of its gearing 3 in particular is more complex than the known arrangements without variator unit 40. However, according to the present invention, the novel arrangement favourably allows for a downsizing of the EM 1, such that the overall cost of manufacturing and/or the overall operating efficiency of the novel powertrain can in fact be improved.

In the graph of figure 3, a specific example is provided of the EM downsizing that is attainable with the novel powertrain. In particular, in the specific example of figure 3, a peak torque level of the EM 1 is reduced from 225 Nm in the known powertrain to 100 Nm in the novel powertrain. Moreover, the peak torque level of the downsized EM 1 is largely unrelated to its rotational speed. Additionally, in the specific example of figure 3, a maximum operating speed of the EM 1 is reduced from 16,000 rpm in the known powertrain to 12,500 rpm in the novel powertrain. To the contrary, the peak power of the downsized EM 1 in the novel powertrain has remained the same as that of the known powertrain at 120 kW.

To enable the EM downsizing illustrated in figure 3, the gearing 3 is specified as follows:
- the largest speed ratio of the variator unit 40 is 2.4;
- the ratio coverage of the variator unit 40 is 4;
- the speed reduction ratio of the first speed reduction stage 31 equals 3.6; and
- the speed reduction ratio of the second speed reduction stage 32 equal 3.5.

The present invention, in addition to the entirety of the preceding description and all details of the accompanying figures, also concerns and includes all of the features in the appended set of claims. Bracketed references in the claims do not limit the scope thereof, but are merely provided as a non-limiting example of a respective feature. Separately claimed features can be applied separately in a given product, or in a given process as the case may be, but these can also be applied simultaneously therein in any combination of two or more of such features.

## Claims

1. An electric passenger car with a powertrain comprising an electric machine (1), a driven wheel (2) and a gearing (3) that is arranged between the electric machine (1) and the driven wheel (2) and that provides a driving connection there between, which gearing (3) includes a variator unit (40) that provides a variable speed ratio between an input shaft and an output shaft thereof, which variator unit (40) comprises an input pulley (42) on its input shaft, an output pulley (43) on its output shaft and a drive belt (41) that is wrapped around and in frictional contact with these pulleys (42, 43), and which gearing (3) further includes a speed reduction stage (32) providing a fixed speed ratio between an input gear wheel (35) and an output gear wheel (36) thereof, whereof the input gear wheel (35) rotates as one with the output shaft of variator unit (40) and whereof the output gear wheel (36) rotates as one with the driven wheel (2), **characterized in that** the gearing (3) includes a further speed reduction stage (31) providing a fixed further speed ratio between an input gear wheel (33) and an output gear wheel (34) thereof, whereof the input gear wheel (33) rotates as one with the electric machine (1) and whereof the output gearwheel (34) rotates as one with the input shaft of the variator unit (40), and **in that** a maximum overall speed ratio provided by the gearing (3) between the electric machine (1) and the driven wheel (2) amounts to at least 20:1 and preferably amounts to at least 30:1.

2. The electric passenger car according to claim 1, **characterized in that** the fixed further speed ratio provided by the speed reduction stage (31) between the electric machine (1) and the variator unit (40) is set in the range from 3:1 to 4:1, preferably at 3.6:1.

3. The electric passenger car according to claim 1 or 2, **characterized in that** the fixed further speed ratio provided by the further speed reduction stage (31) between the electric machine (1) and the variator unit (40) is larger than the fixed speed ratio provided by the speed reduction stage (32) between the variator unit (40) and the driven wheel (2) that is preferably set at 3.5:1.

4. The electric passenger car according to claim 1, 2 or 3, **characterized in that** a ratio coverage of the variator unit (40), as defined by the mathematical quotient between a largest speed ratio and a smallest speed ratio thereof, amounts to between 3.5 and 4.5 and preferably amounts to about 4.

5. The electric passenger car according to claim 1, 2, 3 or 4, **characterized in that** the said largest speed ratio of the variator unit (40) is larger than the inverse value of the said smallest speed ratio thereof and preferably is equal to 2.4:1 with the said smallest speed ratio being equal to 1:1.67.

6. The electric passenger car according to claim 5, **characterized in that** the diameter of the output shaft of the variator unit (40) is larger than the diameter of its input shaft.

7. The electric passenger car according to claim 5, **characterized in that** the outer diameter of the input pulley (42) of the variator unit (40) is smaller than the outer diameter of the output pulley (43) thereof.

8. A method of operating the electric passenger car according to any one of the claims 1-7, wherein the electric motor (1) is controlled to generate a torque level between zero and a maximum torque in dependence on one or more operating parameters of the electric passenger car, with the said maximum torque being independent of a rotational speed of the electric motor (1) in a range between zero and at least 50% of a maximum controlled rotational speed of the electric motor (1) during operation of the electric passenger car.

9. The electric passenger car operating method according to claim 8, **characterized in that** the said maximum torque is independent of the rotational speed of the electric motor (1) in a range between zero and at least 80%, preferably at least 90%, more preferably at least 95% of the maximum controlled rotational speed of the electric motor (1) during operation of the electric passenger car.

10. The electric passenger car operating method according to claim 8, **characterized in that** the said maximum torque is independent of the rotational speed of the electric motor (1) from zero up to the maximum controlled rotational speed of the electric motor (1).

## Patentansprüche

1. Eine elektrische Personenkraftwagen mit einem Antriebsstrang, umfassend eine elektrische Maschine (1), ein angetriebenes Rad (2) und ein zwischen der elektrischen Maschine (1) und dem angetriebenen Rad (2) angeordnetes Getriebe (3), das eine Antriebsverbindung herstellt dazwischen, wobei das Getriebe (3) eine Variatoreinheit (40) umfasst, die ein variables Übersetzungsverhältnis zwischen einer Eingangswelle und einer Ausgangswelle davon bereitstellt, wobei die Variatoreinheit (40) eine Eingangsriemenscheibe (42) an ihrer Eingangswelle umfasst, an Ausgangsriemenscheibe (43) auf seiner Ausgangswelle und einem Antriebsriemen (41), der um diese Riemenscheiben (42, 43) geschlungen ist und mit diesen in Reibungskontakt steht, und wobei das Getriebe (3) ferner eine Untersetzungsstufe (32) aufweist, die a festes Übersetzungsverhältnis zwischen einem Eingangszahnrad (35) und einem Ausgangszahnrad (36) davon, wobei sich das Eingangszahnrad (35) gemeinsam mit der Ausgangswelle der Variatoreinheit (40) dreht und deren Ausgangszahnrad (36) einstückig mit dem angetriebenen Rad (2) dreht, **dadurch gekennzeichnet, dass** das Getriebe (3) eine weitere Untersetzungsstufe (31) umfasst, die ein festes weiteres Übersetzungsverhältnis zwischen einem Eingangszahnrad (33) und einem Ausgangszahnrad (34) bereitstellt, wovon das Eingangszahnrad (33) mit der elektrischen Maschine (1) rotiert und wovon das Ausgangszahnrad (34) mit der Eingangswelle der Variatoreinheit (40) rotiert, und dass maximal das durch das Getriebe (3) bereitgestellte Gesamtübersetzungsverhältnis zwischen der elektrischen Maschine (1) und dem angetriebenen Rad (2) mindestens 20:1 und vorzugsweise mindestens 30:1 beträgt.

2. Der elektrische Personenkraftwagen nach Anspruch 1, **dadurch gekennzeichnet, dass** das durch die Untersetzungsstufe (31) zwischen der Elektromaschine (1) und der Variatoreinheit (40) bereitgestellte feste weitere Übersetzungsverhältnis im Bereich von 3:1 bis eingestellt ist 4:1, vorzugsweise bei 3,6:1.

3. Der elektrische Personenkraftwagen nach Anspruch 1 oder 2, **dadurch gekennzeichnet, dass** das durch die weitere Untersetzungsstufe (31) zwischen der Elektromaschine (1) und der Variatoreinheit (40) bereitgestellte feste weitere Übersetzungsverhältnis größer ist als das durch die Untersetzungsstufe (32) zwischen der Variatoreinheit (40) und dem angetriebenen Rad (2) bereitgestellte feste Übersetzungsverhältnis, die vorzugsweise auf 3,5:1 eingestellt ist.

4. Der elektrische Personenkraftwagen nach Anspruch 1, 2 oder 3, **dadurch gekennzeichnet, dass** eine Übersetzungsabdeckung der Variatoreinheit (40), definiert durch den mathematischen Quotienten zwischen einem größten Übersetzungsverhältnis und einem kleinsten Übersetzungsverhältnis derselben, zwischen 3,5 und 4,5 beträgt und vorzugsweise etwa 4 beträgt.

5. Der elektrische Personenkraftwagen nach Anspruch 1, 2, 3 oder 4, **dadurch gekennzeichnet, dass** das größte Übersetzungsverhältnis der Variatoreinheit (40) größer ist als der Kehrwert des kleinsten Übersetzungsverhältnisses davon und vorzugsweise gleich 2,4:1 ist, wobei das kleinste Übersetzungsverhältnis gleich 1:1,67 ist.

6. Der elektrische Personenkraftwagen nach Anspruch 5, **dadurch gekennzeichnet, dass** der Durchmesser der Ausgangswelle der Variatoreinheit (40) größer ist als der Durchmesser der Eingangswelle davon.

7. Der elektrische Personenkraftwagen nach Anspruch 5, **dadurch gekennzeichnet, dass** der Außendurchmesser der Eingangsriemenscheibe (42) der Variatoreinheit (40) kleiner ist als der Außendurchmesser der Ausgangsriemenscheibe (43) davon.

8. Ein Verfahren zum Betreiben des elektrischen Personenkraftwagens nach einem der Ansprüche 1 bis 7, wobei der Elektromotor (1) gesteuert wird um in Abhängigkeit von einem oder mehreren Betriebsparametern des elektrischen Personenkraftwagens ein Drehmomentniveau zwischen null und einem maximalen Drehmoment zu erzeugen, wobei das maximale Drehmoment unabhängig ist von einer Drehzahl des Elektromotors (1) in einem Bereich zwischen null und mindestens 50% einer maximal gesteuerten Drehzahl des Elektromotors (1) während des Betriebs des elektrischen Personenkraftwagens.

9. Das elektrische Personenkraftwagens Betriebsverfahren nach Anspruch 8, **dadurch gekennzeichnet, dass** das maximale Drehmoment unabhängig von das Drehzahl des Elektromotors (1) ist, in einem Bereich zwischen null und mindestens 80%, vorzugsweise mindestens 90%, stärker bevorzugt mindestens 95% der maximal gesteuerten Drehzahl des Elektromotors (1) während des Betriebs des elektrischen Personenkraftwagens.

10. Das elektrische Personenkraftwagens Betriebsverfahren nach Anspruch 8, **dadurch gekennzeichnet, dass** das maximale Drehmoment unabhängig von der Drehzahl des Elektromotors (1) ist, von null bis zu der maximal geregelten Drehzahl des Elektromotors (1).

## Revendications

1. Une voiture particulière électrique avec un groupe motopropulseur comprenant une machine électrique (1), une roue entraînée (2) et un engrenage (3) qui est disposé entre la machine électrique (1) et la roue entraînée (2) et qui fournit une liaison de conduite entre, quel engrenage (3) comprend un variateur (40) qui fournit un rapport de vitesse variable entre un arbre d'entrée et un arbre de sortie, quel variateur (40) comprend une poulie d'entrée (42) sur son arbre d'entrée, une poulie de sortie (43) sur son arbre de sortie et une courroie d'entraînement (41) enroulée autour de ces poulies et en contact de frottement avec celles-ci (42, 43), et dont l'engrenage (3) inclut en plus un niveau de réduction de vitesse (32) fournissant un rapport de vitesse fixe entre une roue d'engrenage d'entrée (35) et une roue d'engrenage de sortie (36) dont la roue d'engrenage d'entrée (35) tourne en tant qu'une avec l'arbre de sortie du variateur (40) et la roue de sortie (36) en tant que roue entraînée (2), **caractérisée en ce que** l'engrenage (3) inclut un niveau de réduction de vitesse supplémentaire (31) fournissant un rapport de vitesse supplémentaire fixe entre une roue d'entrée (33) et une roue d'engrenage de sortie (34) dont la roue d'entrée (33) tourne en une seule avec la machine électrique (1) En d'autres termes, la roue dentée de sortie (34) tourne comme une seule avec l'arbre d'entrée du variateur (40) et un rapport de vitesse global maximal fourni par l'engrenage (3) entre la machine électrique (1) et la roue entraînée (2) correspond à au moins 20:1 et correspond de préférence à au moins 30:1.

2. La voiture particulière électrique selon la revendication 1, **caractérisée en ce que** de rapport vitesse supplémentaire fixe fourni par le niveau de réduction de vitesse (31) entre la machine électrique (1) et le variateur (40) est réglé dans la plage de 3:1 à 4:1, de préférence à 3,6:1.

3. La voiture particulière électrique selon la revendication 1 ou 2, **caractérisée en ce que** de rapport vitesse supplémentaire fixe fourni par le niveau de réduction de vitesse supplémentaire (31) entre la machine électrique (1) et le variateur (40) est plus grand que le rapport de vitesse fixe fourni par le niveau de réduction de vitesse (32) entre le variateur (40) et la roue entraînée (2) qui est de préférence réglé sur 3,5:1.

4. La voiture particulière électrique selon la revendication 1, 2 ou 3, **caractérisée en ce qu'**un rapport de couverture du variateur (40), tel que défini par le quotient mathématique entre un rapport de vitesse le plus élevé et un rapport de vitesse le plus petit, se situe entre 3,5 et 4,5 et correspond de préférence à environ 4 .

5. La voiture particulière électrique selon la revendication 1, 2, 3 ou 4, **caractérisée en ce que** le rapport de vitesse le plus élevé de l'unité de variation (40) est supérieur à la valeur inverse de ce rapport de vitesse le plus petit et correspond de préférence à 2,4:1 avec le rapport de vitesse le plus petit correspondant à 1:1,67.

6. La voiture particulière électrique selon la revendication 5, **caractérisée en ce que** le diamètre de l'arbre de sortie du variateur (40) est plus grand que le diamètre de son arbre d'entrée.

7. La voiture particulière électrique selon la revendication 5, **caractérisée en ce que** le diamètre extérieur de la poulie d'entrée (42) du variateur (40) est inférieur au diamètre extérieur de la poulie de sortie (43) de celle-ci.

8. Une procédé pour l'opération de la voiture particulière électrique selon l'une des revendication 1-7, dans laquelle le moteur électrique (1) est régulée pour générer un niveau de couple entre zéro et un couple maximal en fonction d'un ou de plusieurs paramètres de fonctionnement de la voiture particulière électrique, ce couple maximal étant indépendant d'une vitesse de rotation du moteur électrique (1) dans une plage comprise entre zéro et au moins 50% d'une vitesse de rotation maximale régulée du moteur électrique (1) pendant l'utilisation de la voiture particulière électrique.

9. La procédé pour l'opération de la voiture particulière électrique selon la revendication 8, **caractérisée en ce que** ledit couple maximal est indépendant de la vitesse de rotation du moteur électrique (1) dans une plage comprise entre zéro et au moins 80%, de préférence au moins 90%, de préférence au moins 95% de la vitesse de rotation maximale pilotée du moteur électrique (1) pendant l'utilisation de la voiture de tourisme électrique.

10. La procédé pour l'opération de la voiture particulière électrique selon la revendication 8, se **caractérisée en ce que** ledit couple maximal est indépendant de la vitesse de rotation du moteur électrique (1) de zéro jusqu'à la vitesse de rotation maximale régulée du moteur électrique (1).
